# EUROPÄISCHE PATENTSCHRIFT

(11) **EP 3 289 885 B1**
(45) Veröffentlichungstag und Bekanntmachung des Hinweises auf die Patenterteilung: **23.01.2019**
(21) Anmeldenummer: 17174519.3
(22) Anmeldetag: 06.06.2017
(51) Int. Cl.: A23G 3/34, A23G 3/20, A23G 3/22, A23G 7/00

(54) **ÜBERZIEHMASCHINE MIT AUTOMATISIERTER ABBLASLUFTTEMPERATURREGELUNG**
COATING MACHINE WITH AUTOMATIC BLOW OFF AIR TEMPERATURE CONTROL
MACHINE À ENROBER COMPRENANT UN DISPOSITIF DE RÉGULATION DE LA TEMPÉRATURE DE L'AIR DE SOUFFLAGE AUTOMATISÉE

(30) Priorität: 31.08.2016 DE 102016116246
(43) Veröffentlichungstag der Anmeldung: 07.03.2018
(73) Patentinhaber: Sollich KG, 32105 Bad Salzuflen (DE)
(72) Erfinder: Sollich, Thomas, 32689 Kalletal (DE); Bläsing, Rüdiger, 33613 Bielefeld (DE)
(74) Vertreter: REHBERG HÜPPE + PARTNER

(56) Entgegenhaltungen:
- EP-A2- 0 603 781
- EP-A2- 1 000 550
- DE-A1-102013 001 743
- DE-A1-102013 004 601
- DE-A1-102013 014 716
- DE-B3-102004 062 137
- GB-A- 201 627
- GB-A- 559 000
- US-A- 4 486 452

## Beschreibung

### TECHNISCHES GEBIET DER ERFINDUNG

Die Erfindung betrifft eine Schokoladenüberziehmaschine mit einem Schleierkasten zum Aufbringen flüssiger Schokolademasse auf Süßwarenprodukte.

Die Überziehmaschine weist weiterhin eine Gebläseeinrichtung auf, die zum Abblasen eines Teils der flüssigen Schokolademasse von den mit dieser überzogenen Süßwarenprodukten dient.

### STAND DER TECHNIK

Eine Schokoladenüberziehmaschine mit einem Schleierkasten zum Aufbringen flüssiger Schokolademasse auf Süßwarenprodukte und einer Gebläseeinrichtung zum Abblasen eines Teils der flüssigen Schokolademasse von den mit dieser überzogenen Süßwarenprodukte ist aus dem deutschen Patent DE 10 2004 062 137 B3 bekannt.

Weitere ähnliche Vorrichtungen und Verfahren sind aus den Dokumenten DE 10 2013 001 743 A1, DE 10 2013 004 601 A1, DE 10 2013 014 716 A1, GB 559,000 A, EP 1 000 550 A2, US 4,486,452 A, GB 201,627 A und EP 0 603 781 A2 bekannt.

### AUFGABE DER ERFINDUNG

Der Erfindung liegt die Aufgabe zugrunde, eine Schokoladenüberziehmaschine bereitzustellen, die in vergleichsweise einfacher und kostengünstiger Weise eine gleichbleibende Produktqualität der mit Schokolademasse überzogenen Süßwarenprodukte bei einer Änderung der Temperatur der Umgebung der Schokoladenüberziehmaschine und/oder der Temperatur der flüssigen Schokolademasse gewährleistet.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine automatisiert geregelte Gebläseeinrichtung für eine Schokoladenüberziehmaschine zum Abblasen eines Teils derflüssigen Schokolademasse von den mit dieser überzogenen Süßwarenprodukten.

Gemäß einem ersten Aspekt der Erfindung ist die Gebläseeinrichtung zur Einstellung der Temperatur der Abblasluft durch eine Veränderung des Verhältnisses zwischen diese bildenden Teilvolumenströmen unterschiedlicher Temperatur automatisiert regelbar ausgebildet.

Gemäß einem zweiten Aspekt der Erfindung ist die Gebläseeinrichtung zur Einstellung der Temperatur der Abblasluft in Abhängigkeit von der Temperatur der Schokolademasse automatisiert regelbar ausgebildet ist.

Diese beiden Aspekte können unabhängig voneinander oder in Kombination miteinander verwirklicht werden.

Die Erfindung betrifft weiterhin eine Schokoladenüberziehmaschine mit einem Schleierkasten zum Aufbringen flüssiger Schokolademasse auf Süßwarenprodukte mit einer Gebläseeinrichtung gemäß einem oder beiden der oberhalb beschriebenen Aspekte der Erfindung.

Die Erfindung betrifft weiterhin ein Verfahren zum Regeln einer Gebläseeinrichtung einer Schokoladenüberziehmaschine gemäß einem oder beiden der oberhalb beschriebenen Aspekte der Erfindung.

Diese Aspekte der Erfindung haben gemeinsam, dass eine einfache, kostengünstige und mit gleichbleibend hoher Produktqualität arbeitende Vorrichtung und ein entsprechendes Verfahren zum Überziehen von Süßwarenprodukten mit flüssiger Schokolademasse bereitgestellt werden, bei denen die Temperatur der Abblasluft der Gebläseeinrichtung automatisiert geregelt wird.

In den üblichen Überziehmaschinen des Stands der Technik findet überhaupt keine Regelung der Temperatur der Abblasluft statt. Es ergibt sich somit in Abhängigkeit von der Temperatur der Umgebungsluft der Maschine und der Temperatur bestimmter Bestandteile in der Maschine eine zufällige Abblaslufttemperatur. Diese Temperatur ist insbesondere im Winter und in kalten Regionen zu gering, so dass eine ungewollte abrupte Abkühlung der Schokolademasse erfolgt, was einen negativen Einfluss auf die Qualität des Schokoladeüberzugs hat. Im Sommer und in warmen Regionen hingegen kann die Abblaslufttemperatur zu hoch sein, so dass eine ungewollte zusätzliche Erwärmung des Schokoladeüberzugs erfolgt. Hierdurch werden bereits entstandene Schokoladekristalle wieder aufgeschmolzen, was einen negativen Einfluss auf die Qualität des Schokoladeüberzugs hat.

Diese Probleme werden nun durch die erfindungsgemäße automatisierte Regelung der Temperatur der Abblasluft beseitigt. Die Regelung erfolgt unter Einsatz einer maschinellen Regeleinrichtung und von durch diese geregelte Maschinenkomponenten. Die Temperatur der Abblasluft kann dadurch automatisch so eingestellt werden, dass sich der gewünschte Einfluss auf den Schokoladeüberzug ergibt. Dies bedeutet oftmals, dass die Temperatur der Abblasluft in etwa der Temperatur der flüssigen Schokolademasse kurz vor dem Aufbringen auf die Süßwarenprodukte entspricht. Es kann aber auch ein gewisser Temperaturversatz gewollt sein, d. h. die Temperatur der Abblasluft kann bewusst etwas oberhalb oder unterhalb der Massetemperatur der flüssigen Schokolade liegen. In beiden Konstellationen wird die Regelung dann vorzugsweise so ausgeführt, dass die Temperatur der Abblasluft annähernd konstant gehalten wird. In Abhängigkeit von der Temperatur der Umgebung kann die Regelung aber auch nur so ausgeführt werden, dass der Ist-Wert der Temperatur der Abblasluft dem Soll-Wert so nahe wie möglich kommt, ohne diesen jemals zu erreichen.

Gemäß dem ersten Aspekt der Erfindung erfolgt die Einstellung der Temperatur der Abblasluft durch eine Veränderung des Verhältnisses zwischen diese bildenden Teilvolumenströmen unterschiedlicher Temperaturen. Es kann sich dabei um zwei, drei, vier oder mehr Teilvolumenströme handeln. Üblicherweise liegen aber im Wesentlichen zwei Teilvolumenströme vor. Bei dem ersten Teilvolumenstrom handelt es sich oftmals um einen Teilvolumenstrom aus dem Innenraum der Schokoladenüberziehmaschine. Bei dem zweiten Teilvolumenstrom handelt es sich oftmals um einen Teilvolumenstrom aus der Umgebung der Schokoladenüberziehmaschine.

Die Benennung der verschiedenen Teilvolumenströme in dieser Anmeldung als "erster" Teilvolumenstrom, "zweiter" Teilvolumenstrom usw. dient zunächst nur zur namentlichen Unterscheidung der Teilvolumenströme. Die in diesem Zusammenhang genannten Quellen der Teilvolumenströme können dabei genau in der beschriebenen Weise oder in einer anderen Weise vorliegen.

Durch die Veränderung des Verhältnisses zwischen den Teilvolumenströmen unterschiedlicher Temperatur ergibt sich eine Änderung der Temperatur des resultierenden Gesamtvolumenstroms der Abblasluft. In vielen Fällen herrscht im Innenraum der Maschine aufgrund der Abwärme der dort angeordneten und angetriebenen Elemente und/oder z. B. von Heizstrahlern eine höhere Temperatur als in der Umgebung der Überziehmaschine. Wenn die gemessene Temperatur des Gesamtvolumenstroms zu hoch ist, wird also der prozentuale Anteil des aus dem Innenraum der Maschine stammenden Teilvolumenstroms reduziert, wodurch die Temperatur der Abblasluft sinkt. Das Umgekehrte gilt entsprechend.

Die Gebläseeinrichtung weist eine Ansaugvorrichtung zum Ansaugen der Teilvolumenströme auf, wobei die Ansaugvorrichtung ein Stellelement mit verschiedenen Stellungen aufweist. Das Verhältnis zwischen den Teilvolumenströmen ist durch die Stellung des Stellelements einstellbar. Jede der Stellungen ist einem anderen Verhältnis zwischen den Teilvolumenströmen zugeordnet und führt zu einer Änderung der Temperatur des Gesamtvolumenstroms der Abblasluft. Die Stellungen können stufenlos oder in Stufen einnehmbar ausgebildet sein.

Das Stellelement kann dabei so ausgebildet sein, dass es zunächst direkt nur einen der Teilvolumenströme ändert und sich der oder die anderen Teilvolumenströme anschließend automatisch von selbst entsprechend anpassen. Das Stellelement kann aber auch so ausgebildet sein, dass es gleichzeitig und direkt beide und/oder alle Teilvolumenströme einstellt.

Die Gebläseeinrichtung kann einen mit dem Stellelement verbundenen Stellmotor zum Verstellen der Stellung des Stellelements aufweisen. In dieser Weise wird die automatisierte Bewegung ohne manuelles Eingreifen erreicht. Der Stellmotor ist Teil des Regelkreises und wird in Abhängigkeit von der gemessenen Ist-Temperatur der Abblasluft und deren Abweichung von der Soll-Temperatur der Abblasluft entsprechend angesteuert.

Die Ansaugvorrichtung kann als Ansaugkammer mit einem Drehschieber ausgebildet sein. In der Ansaugkammer findet dann die Zusammenführung der Teilvolumenströme statt. Der Drehschieber bestimmt das Verhältnis zwischen den Teilvolumenströmen.

Der Drehschieber kann so ausgebildet sein, dass bei einer Änderung seiner Stellung eine erste Einlassöffnung in der Ansaugkammer für einen ersten Teilvolumenstrom vergrößert und eine zweite Einlassöffnung in der Ansaugkammer für einen zweiten Teilvolumenstrom im gleichen Verhältnis verkleinert wird. In dieser Weise wird durch einen Drehschieber gleichzeitig eine Veränderung beider Teilvolumenströme direkt erzielt. Gleichzeitig wird sichergestellt, dass der Gesamtvolumenstrom im Wesentlichen konstant bleibt.

Das Stellelement kann aber auch als Schieber ausgebildet sein, der derart relativ zu einer ersten Einlassöffnung der Gebläseeinrichtung für einen ersten Teilvolumenstrom automatisiert bewegbar ausgebildet ist, dass sich das Verhältnis zwischen den Teilvolumenströmen ändert. Bei dieser Ausführungsform wird nur die Größe einer Einlassöffnung direkt verändert. Dies führt dann zunächst nur zu einer Änderung des durch diese Einlassöffnung strömenden Teilvolumenstroms. Bei einer gleichbleibenden Drehzahl des Gebläses der Gebläseeinrichtung findet dann aber automatisch eine entsprechende Anpassung des zweiten Teilvolumenstroms statt.

Die Gebläseeinrichtung kann derart automatisiert regelbar ausgebildet sein, dass der Gesamtvolumenstrom der Abblasluft bei einer Veränderung des Verhältnisses zwischen den Teilvolumenströmen im Wesentlichen konstant bleibt. Dies hat den Vorteil, dass konstante Abblasbedingungen herrschen und sich somit eine konstante Produktqualität ergibt. Es ist aber ebenfalls möglich, dass sich aufgrund einer Veränderung des Verhältnisses zwischen den Teilvolumenströmen eine Änderung der Größe des Gesamtvolumenstroms ergibt. In diesem Fall ist dann also nur die Temperatur und nicht der Volumenstrom der Abblasluft im Wesentlichen konstant. Der Gesamtvolumenstrom kann dann aber nachgeregelt werden, wie dies unterhalb beschrieben ist. Die Gebläseeinrichtung weist einen Temperatursensor zur Messung der Temperatur der Abblasluft auf. Diese gemessene Temperatur geht dann als Ist-Temperatur in den Regelkreis ein und wird mit der vorgegebenen einstellbaren Soll-Temperatur verglichen. In Abhängigkeit von dem Unterschied zwischen der Ist-Temperatur und der Soll-Temperatur wird dann die oberhalb beschriebene Regelung durchgeführt.

Es ist aber auch möglich, weitere Temperatursensoren anzuordnen und deren Werte in die Regelung einfließen zu lassen. Mittels eines Temperatursensors TU kann die Temperatur der Luft in der Umgebung gemessen werden. Mittels eines Temperatursensors TO kann die Temperatur der Luft im Oberraum der Schokoladenüberziehmaschine gemessen werden.

Unabhängig von dem oberhalb beschriebenen ersten Aspekt der Erfindung und dessen weiteren Ausgestaltungen oder in Kombination damit kann die Gebläseeinrichtung gemäß dem zweiten Aspekt der Erfindung zur Einstellung der Temperatur der Abblasluft in Abhängigkeit von der Temperatur der Schokolademasse automatisiert regelbar ausgebildet sein. Die automatisierte Regelung ist so ausgebildet, dass die gemessene oder in anderer Weise bestimmte Temperatur der flüssigen Schokolademasse in die Regelung eingeht. Hierdurch wird eine weitere Automatisierungsstufe der Überziehmaschine erreicht. Es muss nämlich nicht mehr der Soll-Wert der Temperatur der Abblasluft manuell eingegeben werden. Stattdessen wird der Soll-Wert automatisch durch die gemessene Temperatur der flüssigen Schokolademasse vorgegeben. Es ist aber auch möglich, dass der Soll-Wert anhand anderer in der Regelung bereits vorhandener Daten (z. B. Daten zur Art der gerade in der Überziehmaschine verarbeiteten Schokolademasse) vorgegeben wird.

In vielen Fällen erfolgt die Regelung so, dass die Temperatur der Abblasluft zielmäßig im Wesentlichen mit der Temperatur der flüssigen Schokolademasse übereinstimmt. Sie kann insbesondere zwischen etwa 28 °C und 32 °C liegen. Dies entspricht dem üblichen Temperaturbereich flüssiger Schokolademasse, wie diese in Überziehmaschinen eingesetzt wird. Die Regelung kann aber auch so erfolgen, dass bewusst ein bestimmter Temperaturversatz vorliegt - d. h. die Temperatur der Abblasluft um einen definierbaren Betrag oberhalb oder unterhalb der Temperatur der flüssigen Schokolademasse liegt. Es versteht sich, dass die Regelung insgesamt so träge einstellbar ist, dass unnötige Nachregelungen der Temperatur der Abblasluft bei geringfügigen Schwankungen der Temperatur der Schokolademasse und/oder der Temperatur der Teilvolumenströme unterbleiben.

Die Temperatur der flüssigen Schokolademasse wird insbesondere in einem Rohr stromaufwärts des Schleierkastens der Schokoladenüberziehmaschine gemessen. Bei diesem Rohr kann es sich z. B. um ein Steigrohr einer Pumpe vor dem Schleierkasten und einem ebenfalls in der Schokoladenüberziehmaschine vorhandenen Tunkkasten handeln. Der Tunkkasten dient bekanntlich dazu, um die auf einem Gitterband aufliegenden und mittels diesem durch die Überziehmaschine transportierten Süßwarenprodukte auch von unten mit Schokolademasse zu benetzen. Der Temperatursensor für die Schokolademasse könnte aber auch an einer anderen geeigneten Stelle in der Überziehmaschine angeordnet sein.

Dieser zweite Aspekt der Erfindung kann auch in Kombination mit einem Wärmetauscher angewendet werden. Die Abblasluft wird durch den Wärmetauscher geführt, wobei der Wärmetauscher zur Einstellung der Temperatur der Abblasluft automatisiert regelbar ausgebildet ist. In diesem Fall setzt sich die Abblasluft also insbesondere nicht aus mehreren Teilvolumenströmen unterschiedlicher Temperaturen zusammen. Durch den Wärmetauscher wird insbesondere temperiertes Wasser geführt.

Unabhängig von dem oberhalb beschriebenen ersten und zweiten Aspekt der Erfindung und deren weiteren Ausgestaltungen oder in Kombination damit kann die Drehzahl des Gebläses der Gebläseeinrichtung geregelt werden, um einen im Wesentlichen konstanten Volumenstrom der Abblasluft zu erreichen. Dies bietet sich insbesondere an, wenn aufgrund einer Variierung der Größe von Teilvolumenströmen eine Änderung des Gesamtvolumenstroms eintritt. In solchen Fällen kann die Drehzahl des Gebläses erhöht bzw. abgesenkt werden, um die unerwünschte Änderung der Größe des Gesamtvolumenstroms zu beseitigen. Für diese Regelung kann beispielsweise eine Druckmessung am Ende des Endrohrs der Gebläseeinrichtung oder im Innenraum des Gebläses stattfinden.

Anstelle dieser Regelung ist es beispielsweise auch möglich, die Gebläsedrehzahl in Abhängigkeit von der Stellung des Stellelements der Ansaugvorrichtung der Gebläseeinrichtung festzulegen. Dabei können entsprechende Wertepaare in der Regeleinrichtung hinterlegt sein.

Bei Schokoladenüberziehmaschinen läuft üblicherweise außerhalb der Produktionszeiten ein sogenanntes Nachtprogramm. In diesem Nachtprogramm wird die in der Schokoladenüberziehmaschine herrschende Temperatur erhöht, beispielsweise auf etwa 45 °C, insbesondere durch Heizstrahler. Hierdurch wird die in der Schokoladenüberziehmaschine vorhandene Schokolademasse verlässlich in ihrem geschmolzenen Zustand gehalten und die Schokoladenkristalle werden aufgeschmolzen. Die neue Regeleinrichtung kann nun so einstellbar ausgebildet sein, dass beim Beenden des Nachtprogramms und beim Anfahren der Maschine das Stellelement der Ansaugvorrichtung der Gebläseeinrichtung automatisch seine Stellung einnimmt, in der der Anteil der aus der Umgebung stammenden Luft maximiert ist. Hierdurch wird ein schnellstmögliches Abkühlen der Schokoladenüberziehmaschine erreicht, so dass der Produktionsbetrieb schnellstmöglich aufgenommen werden kann.

Ein weiterer in der Regeleinrichtung hinterlegbarer Regelalgorithmus besteht darin, dass beim Initiieren des Nachtprogramms das Stellelement automatisch seine Position einnimmt, in der der Anteil des aus der Umgebung stammenden Teilvolumenstroms minimiert ist. Hierdurch findet eine sehr schnelle Erwärmung der Schokoladenüberziehmaschine statt. Die Gebläseeinrichtung wird dann insbesondere nach dem Erreichen einer bestimmten Temperatur der Schokolademasse im Nachtproramm abgestellt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Ansicht einer ersten beispielhaften Ausführungsform einer neuen Schokoladenüberziehmaschine mit einer automatisiert geregelten Gebläseeinrichtung.
- **Fig. 2A**: zeigt eine Draufsicht einer Ansaugvorrichtung der Gebläseeinrichtung der Schokoladenüberziehmaschine gemäß Fig. 1 in einer ersten Stellung.
- **Fig. 2B**: zeigt eine Schnittansicht der Ansaugvorrichtung der Gebläseeinrichtung der Schokoladenüberziehmaschine gemäß Fig. 1 in der ersten Stellung.
- **Fig. 3A**: zeigt eine Draufsicht der Ansaugvorrichtung der Gebläseeinrichtung der Schokoladenüberziehmaschine gemäß Fig. 1 in einer zweiten Stellung.
- **Fig. 3B**: zeigt eine Schnittansicht der Ansaugvorrichtung der Gebläseeinrichtung der Schokoladenüberziehmaschine gemäß Fig. 1 in der zweiten Stellung.
- **Fig. 4A**: zeigt eine Draufsicht der Ansaugvorrichtung der Gebläseeinrichtung der Schokoladenüberziehmaschine gemäß Fig. 1 in einer dritten Stellung.
- **Fig. 4B**: zeigt eine Schnittansicht der Ansaugvorrichtung der Gebläseeinrichtung der Schokoladenüberziehmaschine gemäß Fig. 1 in der dritten Stellung.
- **Fig. 5**: zeigt eine schematische Ansicht einer zweiten beispielhaften Ausführungsform einer neuen Schokoladenüberziehmaschine mit einer automatisiert geregelten Gebläseeinrichtung.
- **Fig. 6A**: zeigt eine Draufsicht einer Ansaugvorrichtung der Gebläseeinrichtung der Schokoladenüberziehmaschine gemäß Fig. 5 in einer ersten Stellung.
- **Fig. 6B**: zeigt eine Schnittansicht der Ansaugvorrichtung der Gebläseeinrichtung der Schokoladenüberziehmaschine gemäß Fig. 5 in der ersten Stellung.
- **Fig. 7A**: zeigt eine Draufsicht der Ansaugvorrichtung der Gebläseeinrichtung der Schokoladenüberziehmaschine gemäß Fig. 5 in einer zweiten Stellung.
- **Fig. 7B**: zeigt eine Schnittansicht der Ansaugvorrichtung der Gebläseeinrichtung der Schokoladenüberziehmaschine gemäß Fig. 5 in der zweiten Stellung.
- **Fig. 8A**: zeigt eine Draufsicht der Ansaugvorrichtung der Gebläseeinrichtung der Schokoladenüberziehmaschine gemäß Fig. 5 in einer dritten Stellung.
- **Fig. 8B**: zeigt eine Schnittansicht der Ansaugvorrichtung der Gebläseeinrichtung der Schokoladenüberziehmaschine gemäß Fig. 5 in der dritten Stellung.

### FIGURENBESCHREIBUNG

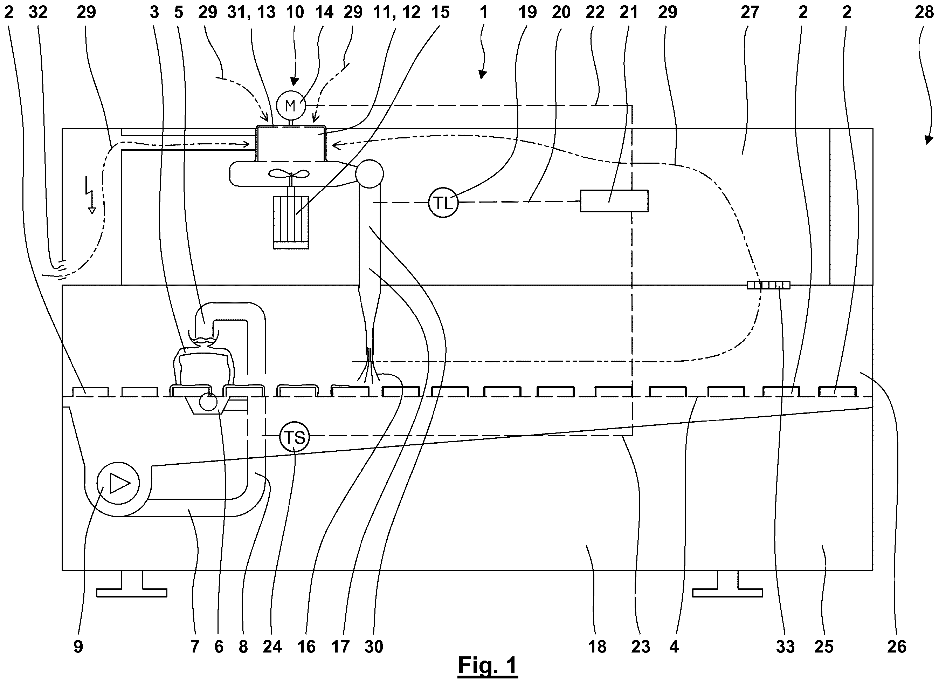

**Fig. 1** zeigt eine schematische Ansicht einer ersten beispielhaften Ausführungsform einer neuen Schokoladenüberziehmaschine 1. Bezüglich ihrer Hauptfunktionalität, nämlich dem Überziehen von Süßwarenprodukten 2 mit Schokolademasse 3 entspricht die Schokoladenüberziehmaschine 1 dem bekannten Stand der Technik, so dass diesbezüglich eine ganz kurze Beschreibung ausreichend ist.

Die Schokoladenüberziehmaschine 1 weist ein umlaufend angetriebenes Gitterband 4 auf, dessen oberes Trum in der Ansicht der Fig. 1 die Süßwarenprodukte 2 von links nach rechts fördert. Dabei passieren die Süßwarenprodukte 2 einen Schleierkasten 5 und einen Tunkkasten 6 und werden durch diese von oben und unten mit Schokolademasse 3 überzogen. Der Schleierkasten 5 und der Tunkkasten 6 werden über eine Rohrleitung 7, ein Steigrohr 8 und eine Pumpe 9 mit flüssiger Schokolademasse 3 versorgt.

Stromabwärts dieser Elemente ist eine Gebläseeinrichtung 10 angeordnet. Die Gebläseeinrichtung 10 weist eine Ansaugvorrichtung 11 auf, die in diesem Fall als Ansaugkammer 12 ausgebildet ist. Die Ansaugkammer 12 weist einen Drehschieber 13 auf, der mit einem Stellmotor 14 verbunden ist.

Die Gebläseeinrichtung 10 weist weiterhin ein Gebläse 15 auf, durch das Luft von außerhalb der Gebläseeinrichtung 1 in die Ansaugkammer 12 eingesaugt wird, wie dies unterhalb genauer beschrieben wird. Von dort gelangt die dadurch gebildete Abblasluft 16 durch ein Endrohr 17 auf die mit noch flüssiger Schokolademasse 3 überzogenen Süßwarenprodukte 2 und entfernt einen Teil der flüssigen Schokolademasse 3. Diese überschüssige Schokolademasse 3 gelangt dann in den unterhalb angeordneten Behälter 18 und wird von dort mittels der Pumpe 9 einem weiteren Durchlauf durch die Schokoladenüberziehmaschine 1 zugeführt.

Die neue Gebläseeinrichtung 10 ist in besonderer Weise automatisiert regelbar ausgebildet. Hierfür weist sie einen Temperatursensor TL 19 für die Abblasluft 16 auf, der über eine elektrische Leitung 20 mit einer Regeleinrichtung 21 verbunden ist. Über eine weitere elektrische Leitung 22 ist die Regeleinrichtung 21 mit dem Stellmotor 14 verbunden. Über eine weitere elektrische Leitung 23 ist die Regeleinrichtung 21 mit einem Temperatursensor TS 24 verbunden. Dieser Temperatursensor 24 ist in dem Steigrohr 8 angeordnet und dient zur Messung der Temperatur der flüssigen Schokolademasse 3.

Die Schokoladenüberziehmaschine 1 lässt sich in einen Behälterraum 25, einen Produktraum 26 und einen Oberraum 27 untergliedern. Es existiert weiterhin die Umgebung 28 um die Schokoladenüberziehmaschine 1 herum. In der Umgebung 28 und den Räumen 25, 26 und 27 herrschen unterschiedliche Temperaturen, die nun für die automatisierte Regelung der Temperatur der Abblasluft 16 genutzt werden.

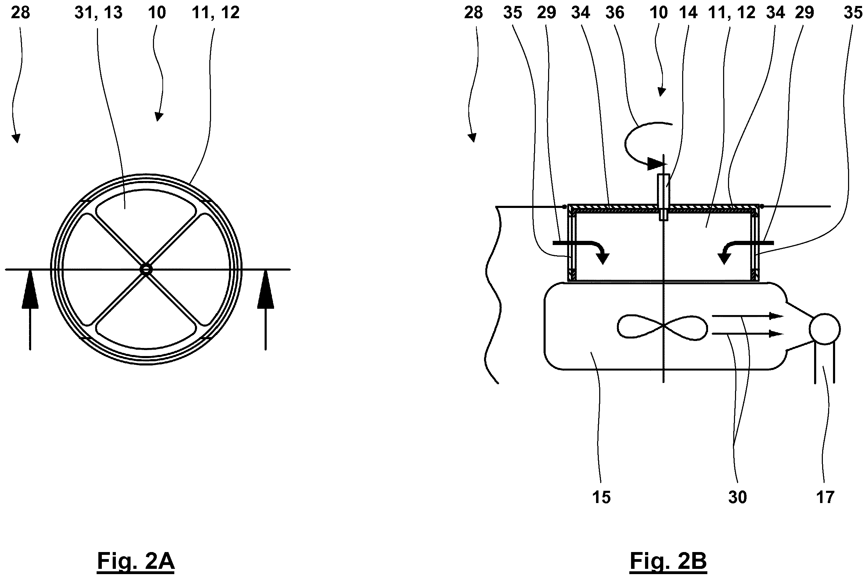

Diese Regelung wird nun anhand von Fig. 1 unter Hinzunahme von Fig. 2-4 weiter beschrieben. Die Gebläseeinrichtung 10 weist zur Erreichung unterschiedlicher Temperaturen der Abblasluft 16 verschiedene Stellungen auf, in denen mindestens zwei Teilvolumenströme 29 unterschiedlicher Temperaturen in unterschiedlichen Verhältnissen zu einem Gesamtvolumenstrom 30 vermischt werden. Dies wird durch unterschiedliche Stellungen eines Stellelements 31 der Ansaugvorrichtung 11 erreicht.

In dem in Fig. 1 dargestellten Beispiel ist die als Ansaugkammer 12 ausgebildete Ansaugvorrichtung 11 so ausgebildet, dass sie drei Teilvolumenströme 29 unterschiedlicher Temperatur nutzen kann. Der erste Teilvolumenstrom 29 stammt aus der Umgebung 28 und gelangt von dort durch einen Einlass 32 in einen Bereich des Oberraums 27, in dem die elektrischen und elektronischen Komponenten der Schokoladenüberziehmaschine 1 angeordnet sind. Dementsprechend weist dieser erste Teilvolumenstrom 29 eine vergleichsweise hohe Temperatur auf. Ein zweiter Teilvolumenstrom 29 stammt direkt aus der Umgebung 28. Dieser weist üblicherweise eine geringere Temperatur als der erste Teilvolumenstrom 29 auf. Ein dritter Teilvolumenstrom 29 stammt aus dem Produktraum 26 und strömt durch eine Öffnung 33 von dort durch den Oberraum 27 und in die Ansaugvorrichtung 11 hinein. Die Temperatur dieses dritten Teilvolumenstroms 29 liegt in vielen Fällen zwischen der Temperatur des ersten Teilvolumenstroms 29 und des zweiten Teilvolumenstroms 29. Es können aber auch andere Verhältnisse vorliegen. Dies gilt insbesondere dann, wenn die Temperatur in der Umgebung 28 im Sommer sehr hoch ist.

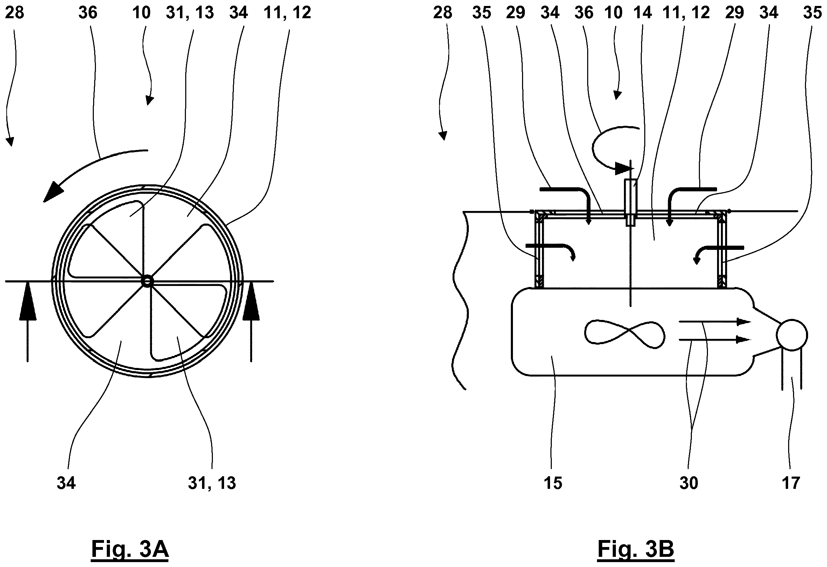

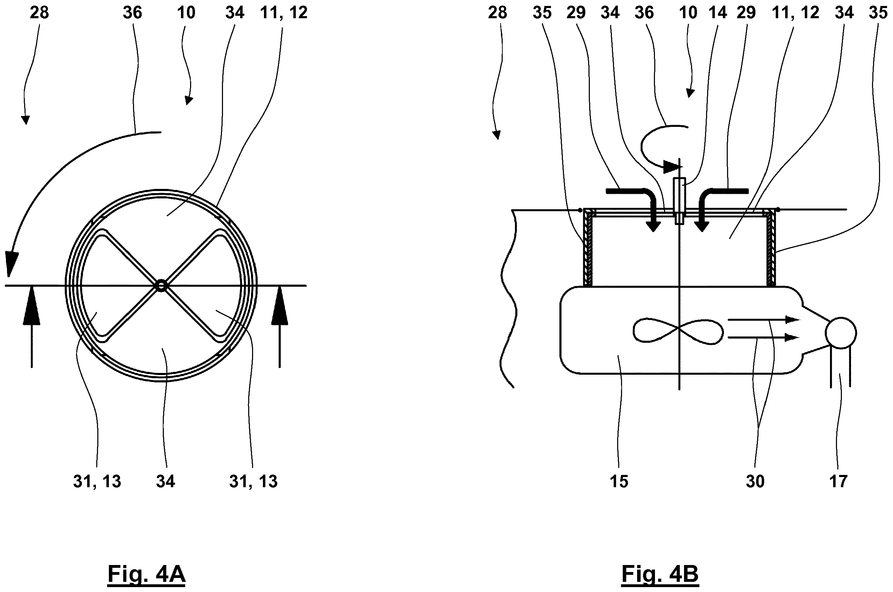

Die verschiedenen Stellungen des Stellelements 31 der Ansaugvorrichtung 11 der Gebläseeinrichtung 10 sind nun in den **Fig. 2-4** gut nachvollziehbar dargestellt. Fig. 2A und Fig. 2B zeigen dabei zwei verschiedene Ansichten einer ersten Stellung des Stellelements 31. Fig. 3A und Fig. 3B zeigen zwei entsprechende Ansichten einer zweiten Stellung des Stellelements 31. Fig. 4A und Fig. 4B zeigen zwei entsprechende Ansichten einer dritten Stellung des Stellelements 31. Die Ansaugkammer 12 weist verschiedene Einlassöffnungen für die verschiedenen Teilvolumenströme 29 auf. Diese Einlassöffnungen können entweder vollständig geöffnet oder vollständig geschlossen sein oder sich in einer Zwischenstellung befinden. Im vorliegenden Beispiel weist die Ansaugkammer 12 obere Einlassöffnungen 34 und seitliche Einlassöffnungen 35 auf. Der Drehschieber 13 ist dabei so als zusammenhängendes Teil ausgebildet, dass er bei einer Rotation gemäß Pfeil 36 beim Öffnen der oberen Einlassöffnungen 34 gleichzeitig ein Schließen der seitlichen Einlassöffnungen 35 herbeiführt.

In Fig. 2A und 2B ist der Drehschieber 13 so eingestellt, dass die oberen Einlassöffnungen 34 vollständig geschlossen sind. Die seitlichen Einlassöffnungen 35 sind vollständig geöffnet. Hierdurch gelangen nur der oberhalb beschriebene erste und dritte Teilvolumenstrom 29 in die Ansaugkammer 12. Anders gesagt gelangt keine Luft unmittelbar aus der Umgebung 28 in die Ansaugkammer 12. In Fig. 2B (und Fig. 3B und 4B) ist nur die Antriebswelle des Motors 14 und nicht der gesamte Motor gezeigt.

Bei einer Verdrehung des Drehschiebers 13 gemäß Pfeil 36 ergibt sich dann die in Fig. 3A und Fig. 3B dargestellte zweite Stellung. Die oberen Einlassöffnungen 34 sind teilweise geöffnet. Auch die seitlichen Einlassöffnungen 35 sind teilweise geöffnet. Hierdurch wird ein anderes Mischungsverhältnis der Teilvolumenströme 29 und somit eine andere Temperatur des Gesamtvolumenstroms 30 erreicht. Dabei gelangt auch Luft direkt aus der Umgebung 28 in die Ansaugkammer 12. Es versteht sich, dass nicht nur diese halb geöffnete Stellung, sondern auch andere teilweise geöffnete bzw. teilweise geschlossene Zwischenstellungen eingenommen werden können.

In Fig. 4A und Fig. 4B ist eine weitere Stellung des Drehschiebers 13 dargestellt. In diesem Fall sind die oberen Einlassöffnungen 34 vollständig geöffnet und die seitlichen Einlassöffnungen 35 vollständig geschlossen. Dadurch gelangt also nur Luft direkt aus der Umgebung 28 in die Ansaugkammer 12.

Es wird üblicherweise davon ausgegangen, dass die Temperatur in der Umgebung 28 niedriger ist als die Temperatur der Teilvolumenströme 29, die durch den Oberraum 27 der Schokoladenüberziehmaschine 1 strömen. Wenn also die mittels des Temperatursensors TL 19 gemessene Ist-Temperatur der Abblasluft 16 höher ist als die in der Regeleinrichtung 21 hinterlegte Soll-Temperatur, wird der Anteil der direkt aus der Umgebung 28 stammenden Teilvolumenströme 29 erhöht. Wenn hingegen die gemessene Ist-Temperatur niedriger ist als die Soll-Temperatur, wird der Anteil der direkt aus der Umgebung 28 stammenden Teilvolumenströmen 29 gesenkt. Der Soll-Wert der Temperatur der Abblasluft 16 kann dabei manuell in die Regeleinrichtung 21 eingegeben werden, aus einem zu der Art der verarbeiteten Schokolademasse 3 gehörenden hinterlegten Datensatz extrahiert werden oder auf einer Messung der Temperatur der flüssigen Schokolademasse 3 mittels des Temperatursensors TS 24 basieren.

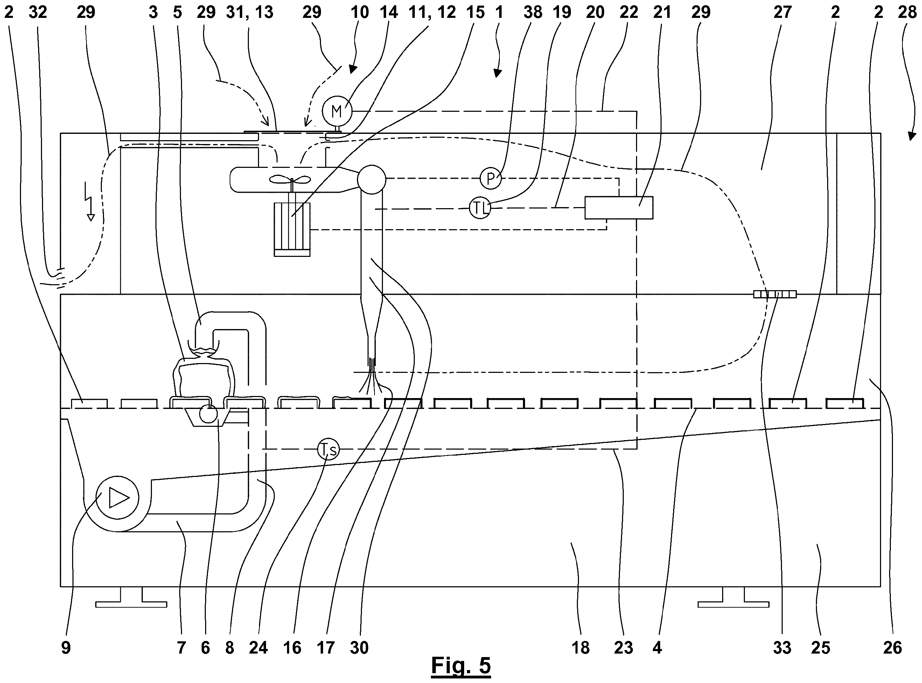

In **Fig. 5-8** ist eine zweite beispielhafte Ausführungsform der neuen Schokoladenüberziehmaschine 1 dargestellt. Da diese Ausführungsform eine Reihe von Gemeinsamkeiten mit der in Fig. 1 dargestellten Schokoladenüberziehmaschine 1 aufweist, wird diesbezüglich auf die oberhalb angegebenen Ausführungen verwiesen.

Im Unterschied dazu ist die Ansaugvorrichtung 11 der Gebläseeinrichtung 10 hier in einer konstruktiv vereinfachten Weise ausgebildet. Bei dieser Ausführungsform der Gebläseeinrichtung 10 weist diese keine Ansaugkammer und keinen vergleichsweise komplexen Drehschieber, sondern einen tellerförmig ausgebildeten Schieber 37 auf. Mit dem Schieber 37 wird lediglich die obere Einlassöffnung 34 ganz oder teilweise geöffnet und geschlossen. Die seitlichen Einlassöffnungen 35 hingegen sind ständig geöffnet. Das Mischungsverhältnis zwischen den Volumenteilströmen 29 ergibt sich dann aufgrund eines automatisch stattfindenden Druckausgleichs.

Die Gebläseeinrichtung 10 ist in diesem Beispiel so ausgebildet, dass die Drehzahl des Gebläses 15 geregelt werden kann, um einen im Wesentlichen konstanten Gesamtvolumenstrom 30 der Abblasluft auch bei sich ändernden Teilvolumenströmen 29 zu erreichen. Hierfür weist die Regeleinrichtung 21 einen Drucksensor P 38 auf, der eine Druckmessung in dem Endrohr 17 der Gebläseeinrichtung 10 durchführt. Der Drucksensor P 38 könnte aber auch an einer anderen geeigneten Stelle im Innenraum des Gebläses 15 oder im Übergangsbereich zwischen dem Innenraum und dem Endrohr 17 angeordnet sein.

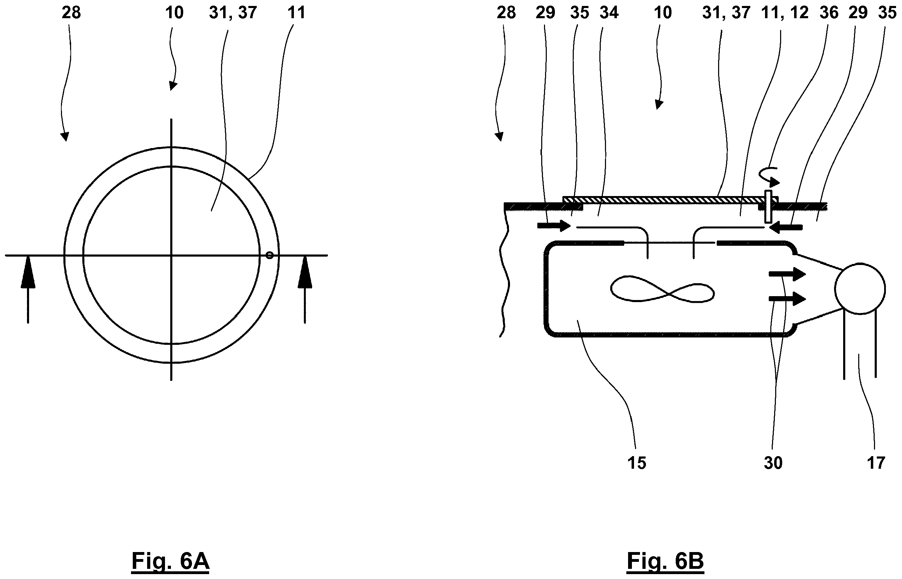

In Fig. 6A und Fig. 6B ist die vollständig geschlossene Stellung des Schiebers 37 gezeigt. Demnach gelangt nur Luft aus dem Oberraum 27 in das Gebläse 15 und bildet dann den Gesamtvolumenstrom 30.

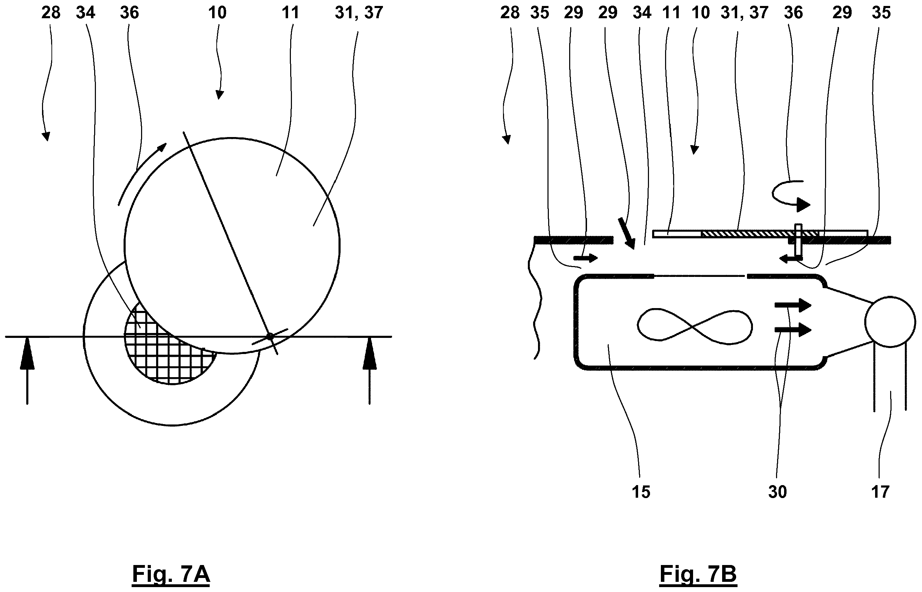

In Fig. 7A und Fig. 7B ist eine teilweise geöffnete Stellung des Schiebers 37 dargestellt. Somit findet eine Mischung zwischen dem aus der Umgebung 28 stammenden Teilvolumenstrom 29 und den aus dem Oberraum 27 stammenden Teilvolumenströmen 29 statt.

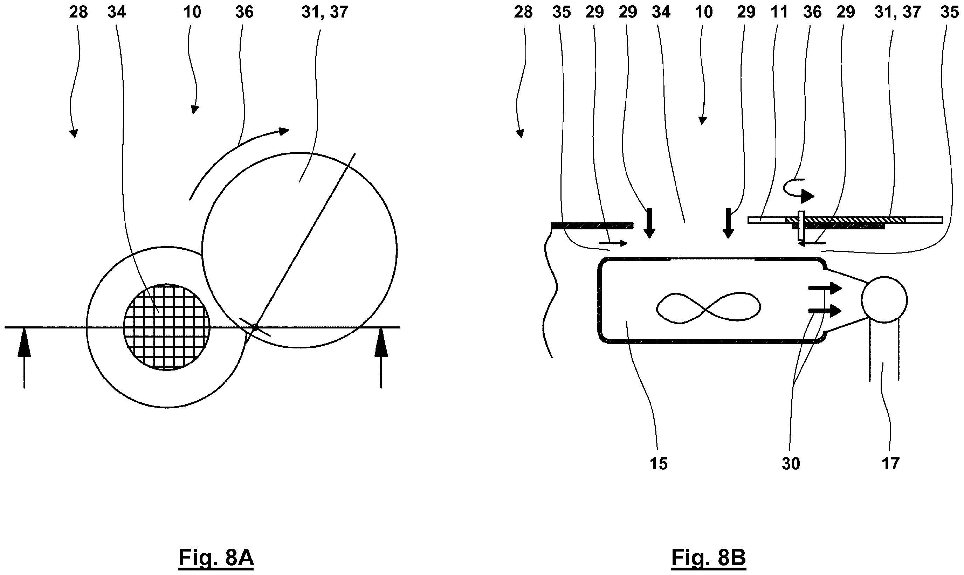

In Fig. 8A und Fig. 8B ist schließlich die vollständig geöffnete Stellung des Schiebers 37 dargestellt. Hierbei ist der Anteil des aus der Umgebung 28 stammenden Teilvolumenstroms 29 maximiert. Es strömt aber auch in dieser Stellung Luft aus dem Oberraum 27 in den Bereich des Gebläses 15 und bildet somit einen Teil des Gesamtvolumenstroms 30.

### BEZUGSZEICHENLISTE

- 1: Schokoladenüberziehmaschine
- 2: Süßwarenprodukt
- 3: Schokolademasse
- 4: Gitterband
- 5: Schleierkasten
- 6: Tunkkasten
- 7: Rohrleitung
- 8: Steigrohr
- 9: Pumpe
- 10: Gebläseeinrichtung
- 11: Ansaugvorrichtung
- 12: Ansaugkammer
- 13: Drehschieber
- 14: Stellmotor
- 15: Gebläse
- 16: Abblasluft
- 17: Endrohr
- 18: Behälter
- 19: Temperatursensor TL
- 20: elektrische Leitung
- 21: Regeleinrichtung
- 22: elektrische Leitung
- 23: elektrische Leitung
- 24: Temperatursensor TS
- 25: Behälterraum
- 26: Produktraum
- 27: Oberraum
- 28: Umgebung
- 29: Teilvolumenstrom
- 30: Gesamtvolumenstrom
- 31: Stellelement
- 32: Einlass
- 33: Öffnung
- 34: obere Einlassöffnung
- 35: seitliche Einlassöffnung
- 36: Pfeil
- 37: Schieber
- 38: Drucksensor P

## Patentansprüche

1. Gebläseeinrichtung (10) für eine Schokoladenüberziehmaschine (1) zum Abblasen eines Teils der Schokolademasse (3) von den mit dieser überzogen Süßwarenprodukten (2), **dadurch gekennzeichnet, dass**
die Gebläseeinrichtung (10) zur Einstellung der Temperatur der Abblasluft (16) durch eine Veränderung des Verhältnisses zwischen diese bildenden Teilvolumenströmen (29) unterschiedlicher Temperatur automatisiert regelbar ausgebildet ist, und
die Gebläseeinrichtung (10) eine Ansaugvorrichtung (11) zum Ansaugen der Teilvolumenströme (29) aufweist, wobei die Ansaugvorrichtung (11) ein Stellelement (31) mit verschiedenen Stellungen aufweist, wobei das Verhältnis zwischen den Teilvolumenströmen (29) durch die Stellung des Stellelements (31) einstellbar ausgebildet ist.

2. Gebläseeinrichtung (10) nach Anspruch 1, **gekennzeichnet durch** einen mit dem Stellelement (31) verbundenen Stellmotor (14) zum Verstellen der Stellung des Stellelements (31).

3. Gebläseeinrichtung (10) nach Anspruch 2, **dadurch gekennzeichnet, dass** die Ansaugvorrichtung (11) als Ansaugkammer (12) mit einem Drehschieber (13) ausgebildet ist.

4. Gebläseeinrichtung (10) nach Anspruch 3, **dadurch gekennzeichnet, dass** der Drehschieber (13) so ausgebildet ist, dass bei einer Änderung seiner Stellung eine erste Einlassöffnung (34; 35) in der Ansaugkammer (12) für einen ersten Teilvolumenstrom (29) vergrößert und eine zweite Einlassöffnung (35; 34) in der Ansaugkammer (12) für einen zweiten Teilvolumenstrom (29) im gleichen Verhältnis verkleinert wird.

5. Gebläseeinrichtung (10) nach Anspruch 1 oder 2, **dadurch gekennzeichnet, dass** das Stellelement (31) als Schieber (37) ausgebildet ist, der derart relativ zu einer ersten Einlassöffnung (34) der Gebläseeinrichtung (10) für einen ersten Teilvolumenstrom (29) automatisiert bewegbar ausgebildet ist, dass sich das Verhältnis zwischen den Teilvolumenströmen (29) ändert.

6. Gebläseeinrichtung (10) nach mindestens einem der vorhergehenden Ansprüche, **dadurch gekennzeichnet, dass** die Gebläseeinrichtung (10) derart automatisiert regelbar ausgebildet ist, dass der Gesamtvolumenstrom (30) der Abblasluft (16) bei einer Veränderung des Verhältnisses zwischen den Teilvolumenströmen (29) im Wesentlichen konstant bleibt.

7. Gebläseeinrichtung (10) für eine Schokoladenüberziehmaschine (1) zum Abblasen eines Teils der Schokolademasse (3) von den mit dieser überzogen Süßwarenprodukten (2), insbesondere nach mindestens einem der vorhergehenden Ansprüche, **dadurch gekennzeichnet, dass** die Gebläseeinrichtung (10) zur Einstellung der Temperatur der Abblasluft (16) in Abhängigkeit von der Temperatur der Schokolademasse (3) automatisiert regelbar ausgebildet ist.

8. Gebläseeinrichtung (10) nach Anspruch 7, **gekennzeichnet durch** einen Wärmetauscher, durch den die Abblasluft (16) geführt wird, wobei der Wärmetauscher zur Einstellung der Temperatur der Abblasluft (16) automatisiert regelbar ausgebildet ist.

9. Schokoladenüberziehmaschine (1) mit einem Schleierkasten (5) zum Aufbringen flüssiger Schokolademasse (3) auf Süßwarenprodukte (2), **gekennzeichnet durch** eine Gebläseeinrichtung (10) nach mindestens einem der vorhergehenden Ansprüche.

10. Verfahren zum Regeln einer Gebläseeinrichtung (10) einer Schokoladenüberziehmaschine (1) zum Abblasen eines Teils der Schokolademasse (3) von den mit dieser überzogen Süßwarenprodukten (2), insbesondere einer Gebläseeinrichtung (10) nach einem der vorhergehenden Ansprüche, **dadurch gekennzeichnet, dass** die Gebläseeinrichtung (10) zur Einstellung der Temperatur der Abblasluft (16) durch eine Veränderung des Verhältnisses zwischen diese bildenden Teilvolumenströmen (29) unterschiedlicher Temperatur automatisiert geregelt wird, wobei die Gebläseeinrichtung (10) eine Ansaugvorrichtung (11) zum Ansaugen der Teilvolumenströme (29) aufweist, wobei die Ansaugvorrichtung (11) ein Stellelement (31) mit verschiedenen Stellungen aufweist, wobei das Verhältnis zwischen den Teilvolumenströmen (29) durch die Stellung des Stellelements (31) eingestellt wird.

11. Verfahren zum Regeln einer Gebläseeinrichtung (10) einer Schokoladenüberziehmaschine (1) zum Abblasen eines Teils der Schokolademasse (3) von den mit dieser überzogen Süßwarenprodukten (2), insbesondere einer Gebläseeinrichtung (10) nach einem der vorhergehenden Ansprüche, insbesondere ein Verfahren nach Anspruch 11, **dadurch gekennzeichnet, dass** die Gebläseeinrichtung (10) zur Einstellung der Temperatur der Abblasluft (16) in Abhängigkeit von der Temperatur der Schokolademasse (3) automatisiert geregelt wird.

12. Gebläseeinrichtung (10) oder Verfahren nach mindestens einem der vorhergehenden Ansprüche, **dadurch gekennzeichnet, dass**
die Temperatur der Schokolademasse (3) in einem Rohr (7, 8) stromaufwärts des Schleierkastens (5) der Schokoladenüberziehmaschine (1) gemessen wird, und/oder
die Temperatur der Abblasluft (16) gemessen wird.

13. Gebläseeinrichtung (10) oder Verfahren nach mindestens einem der vorhergehenden Ansprüche, **dadurch gekennzeichnet, dass** die Temperatur der Abblasluft (16) so geregelt wird, dass sie in etwa der Temperatur der flüssigen Schokolademasse (3) entspricht und insbesondere zwischen etwa 28 °C und 32 °C liegt.

14. Gebläseeinrichtung (10) oder Verfahren nach mindestens einem der vorhergehenden Ansprüche, **dadurch gekennzeichnet, dass** ein erster Teilvolumenstrom (29) aus dem Innenraum (26, 27) der Schokoladenüberziehmaschine (1) und ein zweiter Teilvolumenstrom (29) direkt aus der Umgebung (28) der Schokoladenüberziehmaschine (1) stammt.

## Claims

1. A blower unit (10) for a chocolate coating machine (1) for blowing off a part of the chocolate mass (3) from confectionary products (2) being coated by the chocolate mass (3), **characterised in that**
the blower unit (10) is designed to be controllable in an automated way for adjusting the temperature of the blowing off air (16) by a change of the ratio between the partial volume flows (29) forming the blowing off air (16), and
the blower unit (10) includes a suction apparatus (11) for sucking in the partial volume flows (29), the suction apparatus (11) including an actuator element (31) having different positions, the ratio between the partial volume flows (29) being designed to be adjustable by the positions of the actuator element (31).

2. The blower unit (10) of claim 1, **characterised by** an actuator motor (14) being connected to the actuator element (31) for adjusting the position of the actuator element (31).

3. The blower unit (10) of claim 2, **characterised in that** the suction apparatus (11) is designed as a suction chamber (12) including a rotary slide (13).

4. The blower unit (10) of claim 3, **characterised in that** the rotary slide (13) is designed such that, when a change of its position occurs, a first inlet opening (34; 35) in the suction chamber (12) for a first partial volume flow (29) is enlarged and a second inlet opening (35; 34) in the suction chamber (12) for a second partial volume flow (29) is reduced in the same ratio.

5. The blower unit (10) of claim 1 or 2, **characterised in that** the actuator element (31) is designed as a slider (37) being designed to be movable in an automated way with respect to a first inlet opening (34) of the blower unit (10) for a first partial volume flow (29) such that the ratio between the partial volume flows (29) changes.

6. The blower unit (10) of at least one of the preceding claims, **characterised in that** the blower unit (10) is designed to be controllable in an automated way such that the total volume flow (30) of the blow off air (16) remains substantially constant during a change of the ratio between the partial volume flows (29).

7. A blower unit (10) for a chocolate coating machine (1) for blowing off a part of the chocolate mass (3) from the confectionary products (2) being coated by the chocolate mass (3), especially of at least one of the preceding claims, **characterised in that** the blower unit (10) is designed to be controllable in an automated way for adjusting the temperature of the blow off air (16) depending on the temperature of the chocolate mass (3).

8. The blower unit (10) of claim 7, **characterised by** a heat exchanger through which the blow off air (16) is directed, the heat exchanger being designed to be controllable in an automated way for adjusting the temperature of the blow off air (16).

9. A chocolate coating machine (1) including a curtain trough (5) for applying liquid chocolate mass (3) to confectionary products (2), **characterised by** a blower unit (10) of at least one of the preceding claims.

10. A method of controlling a blower unit (10) of a chocolate coating machine (1) for blowing off a part of the chocolate mass (3) from the confectionary products (2) being coated by the chocolate mass (3), especially a blower unit (10) of at least one of the preceding claims, **characterised in that** the blower unit (10) is controlled in an automated way for adjusting the temperature of the blow off air (16) by a change of the ratio between the partial volume flows (29) forming the blow off air (16) and having different temperatures, the blower unit (10) including a suction apparatus (11) for sucking in the partial volume flows (29), the suction apparatus (11) including an actuator element (31) having different positions, the ratio between the partial volume flows (29) being adjusted by the position of the actuator element (31).

11. A method of controlling a blower unit (10) of a chocolate coating machine (1) for blowing off a part of the chocolate mass from confectionary products (2) being coated by the chocolate mass (3), especially a blower unit (10) of at least one of the preceding claims, especially a method of claim 11, **characterised in that** the blower unit (10) is controlled in an automated way to adjust the temperature of the blow off air (16) depending on the temperature of the chocolate mass (3).

12. The blower unit (10) or the method of at least one of the preceding claims, **characterised in that**
the temperature of the chocolate mass (3) is measured in a tube (7, 8) upstream of the curtain trough (5) of the chocolate coating machine (1), and/or
the temperature of the blow off air (16) is measured.

13. The blower unit (10) or the method of at least one of the preceding claims, **characterised in that** the temperature of the blow off air (16) is controlled such that it corresponds approximately to the temperature of the liquid chocolate mass (3) and is especially between approximately 28 °C and 32 °C.

14. The blower unit (10) or the method of at least one of the preceding claims, **characterised in that** a first partial volume flow (29) originates from the interior (26, 27) of the chocolate coating machine (1) and a second partial volume flow (29) originates directly from the surroundings (28) of the chocolate coating machine (1).

## Revendications

1. Dispositif de soufflage (10) pour une machine d'enrobage de chocolat (1) pour le soufflage d'une partie de la masse de chocolat (3) des confiseries (2) revêtues avec celle-ci, **caractérisé en ce que**
le dispositif de soufflage (10) est régulable de manière automatisée pour le réglage de la température de l'air de soufflage (16) grâce à une modification du rapport entre les flux volumiques partiels (29), constituant celui-ci, de températures différentes, et
le dispositif de soufflage (10) comprend un dispositif d'aspiration (11) pour l'aspiration des flux volumiques partiels (29), le dispositif d'aspiration (11) comprenant un élément de réglage (31) avec différentes positions, le rapport entre les flux volumiques partiels (29) étant réglable grâce à la position de l'élément de réglage (31).

2. Dispositif de soufflage (10) selon la revendication 1, **caractérisé par** un moteur pas-à-pas (14) relié avec l'élément de réglage (31) pour le réglage de la position de l'élément de réglage (31).

3. Dispositif de soufflage (10) selon la revendication 2, **caractérisé en ce que** le dispositif d'aspiration (11) est conçu comme une chambre d'aspiration (12) avec une vanne rotative (13).

4. Dispositif de soufflage (10) selon la revendication 3, **caractérisé en ce que** la vanne rotative (13) est conçue de façon à ce que, lors d'une modification de sa position, une première ouverture d'entrée (34; 35) dans la chambre d'aspiration (12) pour un premier flux volumique partiel (29) est agrandie et une deuxième ouverture d'entrée (35; 34) dans la chambre d'aspiration (12) pour un deuxième flux volumique partiel (29) est réduite du même rapport.

5. Dispositif de soufflage (10) selon la revendication 1 ou 2, **caractérisé en ce que** l'élément de réglage (31) est conçu comme un coulisseau (37) qui est mobile de manière automatisée par rapport à une première ouverture d'entrée (34) du dispositif de soufflage (10) pour un premier flux volumique partiel (29), de façon à ce que le rapport entre les flux volumiques partiels (29) varie.

6. Dispositif de soufflage (10) selon l'une des revendications précédentes, **caractérisé en ce que** le dispositif de soufflage (10) est régulable de manière automatisée de façon à ce que le flux volumique total (30) de l'air de soufflage (16) reste globalement constant lors d'une modification du rapport entre les flux volumiques partiels (29).

7. Dispositif de soufflage (10) pour une machine d'enrobage de chocolat (1) pour le soufflage d'une partie de la masse de chocolat (3) des confiseries (2) revêtues avec celle-ci, **caractérisé en ce que** le dispositif de soufflage (10) est régulable de manière automatisée pour le réglage de la température de l'air de soufflage (16) en fonction de la température de la masse de chocolat (3).

8. Dispositif de soufflage (10) selon la revendication 7, **caractérisé par** un échangeur thermique à travers lequel l'air de soufflage (16) est guidé, l'échangeur thermique étant régulable de manière automatisée pour le réglage de la température de l'air de soufflage (16).

9. Machine d'enrobage de chocolat (1) avec un caisson d'enrobage (5) pour l'application d'une masse de chocolat liquide (3) sur les confiseries (2), **caractérisée par** un dispositif de soufflage (10) selon au moins l'une des revendications précédentes.

10. Procédé de régulation d'un dispositif de soufflage (10) d'une machine d'enrobage de chocolat (1) pour le soufflage d'une partie de la masse de chocolat (3) des confiseries (2) enrobées avec celle-ci, plus particulièrement d'un dispositif de soufflage (10) selon l'une des revendications précédentes, **caractérisé en ce que** le dispositif de soufflage (10) est régulé de manière automatisée pour le réglage de la température de l'air de soufflage (16) grâce à une modification du rapport entre les flux volumiques partiels (29), constituant celui-ci, de températures différentes, le dispositif de soufflage (10) comprenant un dispositif d'aspiration (11) pour l'aspiration des flux volumiques partiels (29), le dispositif d'aspiration (11) comprenant un élément de réglage (31) avec différentes positions, le rapport entre les flux volumiques partiels (29) étant réglé par la position de l'élément de réglage (31).

11. Procédé de régulation d'un dispositif de soufflage (10) d'une machine d'enrobage de chocolat (1) pour le soufflage d'une partie de la masse de chocolat (3) des confiseries (2) enrobées avec celle-ci, plus particulièrement d'un dispositif de soufflage (10) selon l'une des revendications précédentes, plus particulièrement un procédé selon la revendication 11, **caractérisé en ce que** le dispositif de soufflage (10) est régulé de manière automatisée pour le réglage de la température de soufflage (16) en fonction de la température de la masse de chocolat (3).

12. Dispositif de soufflage (10) ou procédé selon au moins l'une des revendications précédentes, **caractérisé en ce que**
la température de la masse de chocolat (3) est mesurée dans un tube (7, 8) en amont du caisson d'enrobage (5) de la machine d'enrobage de chocolat (1) et/ou
la température de l'air de soufflage (16) est mesurée.

13. Dispositif de soufflage (10) ou procédé selon au moins l'une des revendications précédentes, **caractérisé en ce que** la température de l'air de soufflage (16) est régulée de façon à ce qu'elle corresponde approximativement à la masse de chocolat liquide (3) et plus particulièrement se trouve entre environ 28 °C et 32 °C.

14. Dispositif de soufflage (10) ou procédé selon au moins l'une des revendications précédentes, **caractérisé en ce qu'**un premier flux volumique partiel (29) provient de l'espace intérieur (26, 27) de la machine d'enrobage de chocolat (1) et un deuxième flux volumique partiel (29) provient directement de l'environnement (28) de la machine d'enrobage de chocolat (1).
